# EUROPÄISCHE PATENTSCHRIFT

(11) **EP 3 001 852 B1**
(45) Veröffentlichungstag und Bekanntmachung des Hinweises auf die Patenterteilung: **31.01.2018**
(21) Anmeldenummer: 14745157.9
(22) Anmeldetag: 01.08.2014
(51) Int. Cl.: F16D 65/28, F16D 125/66

(54) **BETÄTIGUNGSVORRICHTUNG FÜR EINE BREMSE**
OPERATING APPARATUS FOR A BRAKE
DISPOSITIF D'ACTIONNEMENT POUR UN FREIN

(30) Priorität: 12.08.2013 DE 102013215850
(43) Veröffentlichungstag der Anmeldung: 06.04.2016
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2014/066612
(87) Internationale Veröffentlichungsnummer: WO 2015/022205

(56) Entgegenhaltungen:
- EP-A1- 0 070 106
- FR-A1- 2 197 756

## Beschreibung

Die Erfindung betrifft eine Betätigungsvorrichtung für eine Bremse, insbesondere eine Trommelbremse, insbesondere für ein Nutzfahrzeug.

Trommelbremsen für Nutzfahrzeuge sind im Stand der Technik bekannt. Diese umfassen üblicherweise eine Aktuatoreinheit, die durch einen pneumatisch oder hydraulisch betriebenen Bremszylinder gebildet sein kann, eine Stelleinheit zum Verlagern eines Bremselements, welches mit einem Bremsbelag belegt ist, sowie eine Übertragungseinheit zum Übertragen einer Kraft von der Aktuatoreinheit auf die Stelleinheit.

Bei sogenannten Spreizkeiltrommelbremsen wird durch ein keilförmiges, längsverschiebbares Stellelement ein Bremsbelagträger mit einem daran angebrachten Bremsbelag radial nach außen verlagert und gegen die Innenfläche einer rotierenden Bremstrommel gedrückt. Die durch den Spreizkeil und den Bremszylinder gebildete Achse verläuft hierbei je nach vorhandenem Platz entweder parallel oder schräg zur Achse des zu bremsenden Rades. Das zwischen dem Bremszylinder und dem Stellelement angeordnete Übertragungselement kann so dimensioniert sein, dass der Bremszylinder je nach vorhandenem Bauraum in einer günstigen Position angeordnet ist.

Durch die Abmessungen des Bremszylinders ist der Einbau einer solchen Betätigungsvorrichtung bei bestimmten Aggregaten, welche nur einen begrenzten Freiraum aufweisen, kaum oder nicht möglich.

Dokument FR 2 197 756 A1 offenbart eine Betätigungsvorrichtung gemäß dem Oberbegriff des Anspruchs 1.

Dokument EP 0 070 106 A1 offenbart eine Betätigungseinrichtung für eine Bremse mit einer Aktuatoreinheit mit einem linear bewegbaren Aktuatorlement, einer Stelleinheit, und einer Übertragungseinheit zum Übertragen einer Kraft von dem Aktuatorlement auf das Stellelement.

Der Erfindung liegt die Aufgabe zugrunde, eine Betätigungsvorrichtung für eine Bremse bereitzustellen, welche einen möglichst großen Einsatzbereich aufweist und insbesondere auch bei begrenztem Einbauraum eingesetzt werden kann.

Die Aufgabe wird erfindungsgemäß durch eine Betätigungsvorrichtung mit den Merkmalen des Anspruchs 1 gelöst. Bevorzugte Ausgestaltungen der Erfindung sind in den abhängigen Ansprüchen sowie der nachfolgenden Beschreibung, insbesondere im Zusammenhang mit den beigefügten Figuren, angegeben.

Die Betätigungsvorrichtung, welche insbesondere zum Betätigen einer Trommelbremse vorgesehen sein kann, umfasst erfindungsgemäß eine Aktuatoreinheit, insbesondere einen Bremszylinder, mit einem linear bewegbaren Aktuatorelement, eine Stelleinheit mit einem linear bewegbaren Stellelement, mittels welchem ein Bremselement relativ zu einer Bremsscheibe oder Bremstrommel verlagerbar ist, und eine Übertragungseinheit zum Übertragen einer Kraft von dem Aktuatorelement bzw. der Aktuatoreinheit auf das Stellelement bzw. die Stelleinheit. Erfindungsgemäß umfasst die Übertragungseinheit eine Umlenkeinrichtung, mittels welcher die von dem Aktuatorelement auf das Stellelement übertragene Kraft bzw. die von der Aktuatoreinheit auf die Stelleinheit übertragene Kraft von einer ersten Richtung in eine zweite Richtung umlenkbar ist. Ein Grundgedanke der Erfindung kann darin gesehen werden, die zwischen der Aktuatoreinheit und der Stelleinheit übertragene Kraft entlang eines Winkels umzulenken, so dass die Ausrichtung der Aktuatoreinheit unabhängig von der Ausrichtung der Stelleinheit realisiert werden kann. Dies bedeutet insbesondere, dass eine Längsachse der Aktuatoreinheit gegenüber einer Längsachse der Stelleinheit geneigt bzw. abgewinkelt sein kann. Auf diese Weise lässt sich beispielsweise bei in Achsrichtung begrenztem Bauraum der Bremszylinder in einen bezüglich der Radachse radial weiter außen liegenden Bereich verlagern. Die Achse des Bremszylinders bzw. des Aktuatorelements verläuft hierbei abgewinkelt oder nichtparallel zur Achse der Spreizeinheit bzw. des Stellelements. Zur Übertragung der Bremskraft von der Aktuatoreinheit auf die Stelleinheit ist erfindungsgemäß ein Umlenkelement vorgesehen, welches im Wirkweg zwischen der Aktuatoreinheit und der Stelleinheit angeordnet ist. Die erfindungsgemäße Betätigungsvorrichtung lässt sich aufgrund der Umlenkung der Bremskraft bzw. der Bewegung des Aktuatorelements auch in bauraumtechnisch anspruchsvolle Aggregate und Federungssysteme, beispielsweise Pendelachsaggregate, Lenkachsen, Einzelradaufhängungen oder Portalachsen, einbauen. Durch die konkrete Auswahl des Umlenkwinkels und/oder der Umlenkrichtung lässt sich die Aktuatoreinheit räumlich nahezu beliebig anordnen. Die Stelleinheit kann insbesondere als Spreizeinheit ausgebildet sein und einen längsbewegbaren Spreizkeil als Stellelement umfassen. Die Umlenkung kann grundsätzlich auf beliebige Weise erfolgen. Beispielsweise ist es denkbar, zwischen dem Aktuatorelement und dem Stellelement ein frei bewegbares Koppelelement, zum Beispiel eine Koppelstange, anzuordnen, entlang welcher die Kraft von dem Aktuatorelement auf das Stellelement übertragen wird.

Erfindungsgemäß ist es bevorzugt, dass die Umlenkeinrichtung ein um eine insbesondere positionsfeste Drehachse drehbar gelagertes Umlenkelement aufweist, welches mindestens zwei in Drehrichtung zueinander versetzte Koppeleinrichtungen zum Ankoppeln jeweils eines Kraftübertragungselements umfasst. Durch das an einer Drehachse gelagerte Drehelement lässt sich die Kraft zuverlässig und präzise umlenken, wobei eine mechanische Abstützung an der Drehachse des Umlenkelements erfolgt. Die auf das Aktuatorelement und das Stellelement wirkenden Querkräfte können auf diese Weise reduziert werden. Bei den Kraftübertragungselementen kann es sich insbesondere um das Aktuatorelement und das Stellelement handeln, wobei grundsätzlich auch ein separates Kraftübertragungselement zwischengeschaltet sein kann. Die Koppeleinrichtungen können insbesondere als Andruckflächen zur Kraftübertragung ausgebildet sein.

Zur Einleitung der Kraft in das Umlenkelement kann insbesondere eine erste Koppeleinrichtung oder Andruckfläche vorgesehen sein, auf welche das Aktuatorelement oder ein mit diesem verbundenes Kraftübertragungselement einwirkt. Zur Übertragung der Kraft von dem Umlenkelement auf das Stellelement oder ein mit diesem verbundenes Kraftübertragungselement kann insbesondere eine zweite Koppeleinrichtung oder Andruckfläche vorgesehen sein.

Vorzugsweise sind die Koppeleinrichtungen in einem Winkel von 20° bis 120°, besonders bevorzugt 75° bis 105°, in Umfangsrichtung zueinander versetzt. Als Umfangsrichtung ist ihm Rahmen der vorliegenden Erfindung vorzugsweise eine um die Drehachse des Umlenkelements verlaufende Kreisbahn definiert, die durch zumindest eine der Koppeleinrichtungen verläuft. Die bevorzugten Winkel sind somit zwischen einer ersten Geraden, welche durch die erste Koppeleinrichtung und die Drehachse verläuft, und einer zweiten Geraden, welche durch die zweite Koppeleinrichtung und die Drehachse verläuft, zu messen. Dementsprechend beträgt der Neigungswinkel der Achse der Aktuatoreinheit gegenüber der Achse der Stelleinheit vorzugsweise 20° bis 120°, besonders bevorzugt 75° bis 105°. Die genannten Winkel gewährleisten eine zuverlässige Einleitung der Bremskraft in das Stellelement und ermöglichen eine vorteilhafte Einbaulage der Aktuatoreinheit für eine Vielzahl von Anwendungen.

Zur Bereitstellung einer Hebelwirkung bzw. einer Über- oder Untersetzung zwischen der Aktuatoreinheit und der Stelleinheit ist es bevorzugt, dass die Abstände der Koppeleinrichtungen von der Drehachse des Umlenkelements unterschiedlich sind. Die unterschiedlichen Hebellängen, welche durch die unterschiedlichen Abstände von der Drehachse gebildet werden, ermöglichen beispielsweise eine einfache Realisierung einer Bremskraftverstärkung. Besonders bevorzugt weist das Umlenkelement verschiedene Hebellängen und einen Winkel kleiner 180°, vorzugsweise kleiner 120° zwischen den Hebelarmen auf. Auf diese Weise können bei besonders kompakter Bausweise der Betätigungsvorrichtung hohe Bremskräfte oder große Betätigungswege erreicht werden.

Das Umlenkelement kann beispielsweise scheibenförmig gestaltet sein. Ein besonders stabiles und gewichtsreduziertes Umlenkelement kann dadurch erreicht werden, dass das Umlenkelement mindestens zwei sich im Wesentlichen radial erstreckende Schwenkhebel aufweist, an welchen die Koppeleinrichtungen ausgebildet sind. Das vorzugsweise V-förmig gestaltete Umlenkelement ist an seinem Scheitelpunkt an einer vorzugsweise positionsfesten Drehachse gelagert.

In einer bevorzugten Ausführungsform der Erfindung ist zumindest eine der Koppeleinrichtungen als Gelenkverbindung ausgebildet. Vorzugsweise ist ein Kraftübertragungselement über ein Gelenk mechanisch mit dem Umlenkelement verbunden, wobei eine Kraft übertragbar ist. Bei dem Kraftübertragungselement kann es sich insbesondere um das Aktuatorelement oder das Stellelement oder einen Teil hiervon handeln.

Zur Übertragung der Kraft von dem Aktuatorelement auf das sich drehende Umlenkelement bzw. von dem sich drehenden Umlenkelement auf das Stellelement kann das Aktuatorelement und/oder das Stellelement einen linear bewegbaren Grundkörper und einen an diesem schwenkbar gelagerten Übertragungskopf aufweisen. Der Übertragungskopf kann mit dem Umlenkelement über eine Gelenkverbindung gekoppelt sein. Alternativ kann auch eine radial bewegbare Lagerung des Gelenks vorgesehen sein, um einen Ausgleich zwischen der Drehbewegung des Umlenkelements und der Linearbewegung des Aktuatorelements bzw. des Stellelements zu gewährleisten.

Anstelle eines definierten Anlenkpunktes kann zumindest eine der Koppeleinrichtungen eine Gleit- oder Rollfläche aufweisen, entlang welcher ein Kraftübertragungselement, insbesondere in radialer Richtung, bewegbar, insbesondere gleitbar oder abrollbar, ist. Als radiale Richtung ist ihm Rahmen der vorliegenden Erfindung vorzugsweise eine Parallele zu einer Geraden, welche durch eine der Koppeleinrichtungen und die Drehachse verläuft definiert. Auf diese Weise kann auf einen ausgleichenden Kraftübertragungskopf des Aktuatorelements und/oder des Stellelements verzichtet werden.

Eine besonders robuste und wartungsarme Betätigungsvorrichtung kann dadurch bereitgestellt werden, dass die Stelleinheit und die Übertragungseinheit in einem gemeinsamen Gehäuse aufgenommen sind. Das Gehäuse umschließt vorzugsweise das Umlenkelement sowie das vorzugsweise einen Spreizkeil aufweisende Stellelement. Vorzugsweise ist das Gehäuse zudem direkt an ein Gehäuse der Aktuatoreinheit angeflanscht. Der Eintritt von Schmutz in die Umlenkeinrichtung wird auf diese Weise wirkungsvoll verhindert. Insbesondere bevorzugt ist das gemeinsame Gehäuse einstückig ausgeführt. Vorzugsweise ist das gemeinsame Gehäuse ein einstückiges Gussbauteil, welches besonders einfach herzustellen ist.

Vorzugsweise ist eine Befestigungseinrichtung vorgesehen, welche eine Befestigung der Betätigungsvorrichtung an einem Achselement des zu bremsenden Rades in unterschiedlichen Drehlagen um die Längsachse bzw. Stellachse des Stellelements und/oder eine Radachse eines Achselements eines zu bremsenden Rades ermöglicht. Durch diese variable Befestigungsmöglichkeit lässt sich die Aktuatoreinheit flexibel im Raum um die Längsachse des Stellelements und/oder die Radachse anordnen. Der Einsatzbereich der Betätigungsvorrichtung wird auf diese Weise weiter vergrößert. Insbesondere kann ein Gehäuse der Betätigungsvorrichtung eine Befestigungs- oder Anlagefläche aufweisen, welche sich zumindest teilweise um die Stellachse erstreckt. Die Befestigungsfläche kann beispielsweise als gebogene Fläche ausgeführt sein oder mindestens zwei zueinander abgewinkelte Teilflächen umfassen.

In einer weiteren bevorzugten Ausführungsform bewirkt die Umlenkeinrichtung eine Umlenkung der Kraft in einer Ebene, welche durch eine Radachse eines Achselements eines zu bremsenden Rades und eine Senkrechte zur Radachse aufgespannt wird. Die Senkrechte zur Radachse ist vorzugsweise parallel zur Vertikalen, wobei das Achselement vorzugsweise im Wesentlichen horizontal angeordnet ist. Die Umlenkung erfolgt also in einer Ebene, welche die Längsachse des Achselements beinhaltet. Vorzugsweise ist eine Längsachse der Aktuatoreinheit beziehungsweise des Aktuatorelements (Aktuatorachse) so ausgerichtet, dass sie sich mit der Längsachse des Achselements (Radachse) schneidet.

Die Erfindung ermöglicht es aber auch, dass die Umlenkung in einer Ebene erfolgt, welche durch die Längsachse des Achselements geschnitten wird oder parallel zu der Längsachse angeordnet ist. Eine platzsparende Anordnung der Aktuatoreinheit kann insbesondere dadurch erreicht werden, dass die Aktuatoreinheit eine Längsachse (Aktuatorachse) aufweist, welche gegenüber dem Radius des Achselements des zu bremsenden Rades geneigt ist und/oder dass die Aktuatorachse und die Radachse windschief zueinander verlaufen.

Die Erfindung bietet insbesondere die folgenden Vorteile:
1. Aufgrund der Kraftumlenkung lässt sich eine sehr kompakte, leichte und kostenoptimierte Bremsvorrichtung realisieren, welche insbesondere als Spreizbremse oder Spreizkeilbremse ausgeführt sein kann.
2. Die integrierte Umlenkeinrichtung erfordert keine zusätzlichen Schnittstellen, die zu Dichtigkeitsproblemen führen könnten.
3. Durch die in das Gehäuse der Stelleinheit integrierte Umlenkeinrichtung wird das Zylindergewicht von einem gemeinsamen, steifen Gehäuse aufgefangen, das fest mit dem Achskörper verbunden ist.
4. Es können Standardkomponenten verwendet werden, die lediglich durch die Teile der Umlenkung ergänzt werden müssen.
5. Es können identische Bremszylinder verwendet werden wie bei einer Spreizbeziehungsweise Stelleinheit ohne Umlenkung.
6. Durch die integrierte Umlenkung wird kein außen liegendes Gestänge erforderlich, das empfindlich auf äußere Einflüsse reagieren und die Zuverlässigkeit der Bremse reduzieren könnte.
7. Die Spreizeinheit bleibt wartungsarm.
8. Die Spreizeinheit kann unabhängig von der Bremse komplett vormontiert werden.
9. Es können, wie auch bei Spreizeinheiten ohne Umlenkung, mehre Bremsengrößen abgedeckt werden.
10. Es lässt sich ein einteiliges Gehäuse für die komplette Spreizeinheit einschließlich Umlenkung realisieren.

Die Erfindung wird nachfolgend anhand einer beispielhaften Ausführungsform, welche in den beiliegenden Figuren dargestellt ist, weiter beschrieben.

Es zeigt:
- Fig. 1:: einen Längsschnitt durch eine erfindungsgemäße Betätigungsvorrichtung einer Trommelbremse und
- Fig. 2:: einen Querschnitt durch eine erfindungsgemäße Betätigungsvorrichtung einer Trommelbremse.

Gleiche oder gleich wirkende Komponenten sind in den Figuren mit denselben Bezugszeichen gekennzeichnet.

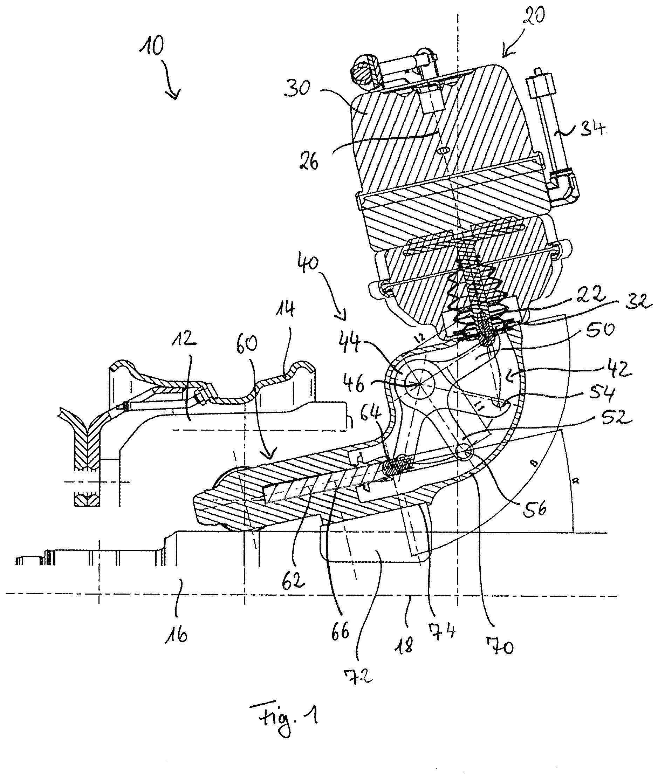

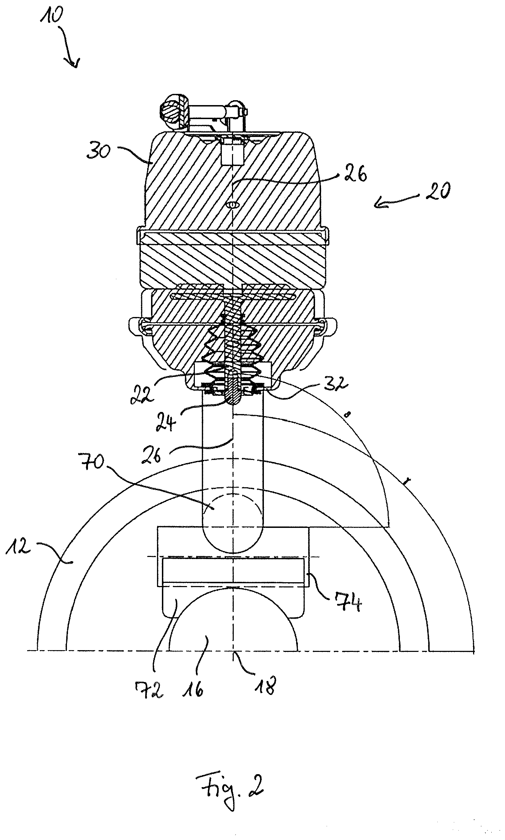

Eine beispielhafte Ausführungsform einer erfindungsgemäßen Betätigungsvorrichtung 10, welche grundsätzlich als Teil einer Bremse, insbesondere einer Trommelbremse aufgefasst werden kann, wird nachfolgend mit Bezug auf die Figuren 1 und 2 beschrieben.

Die Betätigungsvorrichtung 10 umfasst eine Aktuatoreinheit 20, welche als pneumatischer Bremszylinder ausgeführt ist und ein Aktuatorgehäuse 30 aufweist. In dem Aktuatorgehäuse 30 ist ein Aktuatorelement 22 längsverschiebbar entlang einer Aktuatorachse 26 gelagert. Zum pneumatischen Antreiben des Aktuatorelements 22 ist ein Druckluftanschluss 34 vorgesehen. Das Aktuatorelement ist gegen eine Federkraft bewegbar, welche das Aktuatorelement 22 gegen die Druckluft in eine Rückzugsstellung treibt.

Eine Stelleinheit 60, welche auch als Spreizeinheit bezeichnet werden kann, umfasst ein linear entlang einer Stellachse 66 bewegbares Stellelement 62, welches einen in den Figuren nicht dargestellten Spreizkeil aufweist. Durch lineares Verlagern des Spreizkeils entlang der Stellachse 66 lässt sich ein Bremselement radial gegen die Innenseite einer Bremstrommel 12 drücken, um einen Bremsvorgang auszuführen. Die Bremstrommel 12 ist fest mit einer Felge 14 eines zu bremsenden Rades verbunden und dreht sich zusammen mit dieser um ein insbesondere starres bzw. drehfest gelagertes Achselement 16 mit einer Rachachse 18. Die Stellachse 66 des Stellelements 62 verläuft schräg zur Radachse 18.

Zur Übertragung der Bremskraft von dem Aktuatorelement 22 auf das Stellelement 62 ist im Wirkweg zwischen der Aktuatoreinheit 20 und der Stelleinheit 60 eine Übertragungseinheit 40 mit einem Kraftübertragungselement angeordnet. Die Übertragungseinheit 40 umfasst eine Umlenkeinrichtung 42, mittels welcher die Wirkrichtung der Bremskraft von der Aktuatorachse 26 in die hierzu quer oder schräg verlaufende Stellachse 66 umgelenkt wird.

Das Aktuatorelement 22 drückt gegen ein um eine Drehachse 46 drehbar gelagertes Umlenkelement 44, wodurch eine Drehung des Umlenkelements 44 um die Drehachse 46 bewirkt wird. Das Umlenkelement 44 drückt gegen das Stellelement 62 der Stelleinheit 60 und bewirkt eine lineare Verlagerung des Stellelements 62. Eine Bremskraft wird auf diese Weise von dem Aktuatorelement 22 auf das Stellelement 62 übertragen.

Das vorzugsweise V-förmig gestaltete Umlenkelement 44 umfasst zwei in einem Winkel zueinander verlaufende Schwenkhebel 50, 52, welche jeweils eine Koppeleinrichtung 54, 56, beispielsweise eine Koppelfläche oder ein Koppelgelenk, aufweisen. Das Aktuatorelement 22 ist mit einer ersten Koppeleinrichtung 54 des Umlenkelements 44 verbunden, und das Stellelement 62 ist mit einer zweiten Koppeleinrichtung 56 des Umlenkelements 44 verbunden.

Die erste Koppeleinrichtung 54, welche an einem ersten Schwenkhebel 50 ausgebildet ist, weist eine Andruckfläche auf, welche als rinnen- oder wannenförmige Ausnehmung gestaltet ist. Das Aktuatorelement 22 umfasst ein insbesondere schwenkbar an einer Stirnseite gelagertes Druck- oder Kopfelement 24 mit einer entsprechend geformten Andruckfläche, welche beispielsweise zylinder- oder kugelförmig geformt sein kann. Das Kopfelement 24 greift zur Übertragung einer Druckkraft in die Ausnehmung des Umlenkelements 44 ein.

Eine an einem zweiten Schwenkhebel 52 vorgesehene zweite Koppeleinrichtung 56 umfasst ein Gelenk, an welches das Stellelement 62 angekoppelt ist. Zur Übertragung der Kraft auf das sich linear bewegende Stellelement 62 umfasst das Stellelement 62 einen bewegbar an einem Grundkörper gelagerten Übertragungskopf 64. Das Gelenk ermöglicht neben der Übertragung von Druckkräften auch die Übertragung von Zugkräften, beispielsweise um ein Rückziehen des Stellelements 62 zu bewirken. Das Umlenkelement 44 kann durch eine Federkraft vorgespannt sein, gegen welche die Bremskraft wirkt.

Das Umlenkelement 44 und das Stellelement 62 sind in einem gemeinsamen Gehäuse 70 aufgenommen. Das Aktuatorgehäuse 30 der Aktuatoreinheit 20 ist mittels eines Flansches 32 direkt an das Gehäuse 70 angeflanscht. Auf diese Weise ist der Übertragungsmechanismus zur Übertragung der Bremskraft von der Aktuatoreinheit 20 auf die Spreiz- bzw. Stelleinheit 60 gut gegen äußere Einflüsse geschützt.

Das Gehäuse 70 ist so gestaltet, dass die Aktuatoreinheit 20 in unterschiedlichen Drehlagen um die Radachse 18 und in unterschiedlichen Drehlagen um die Stellachse 66 angeordnet werden kann. Hierzu ist ein erster Befestigungsbereich 72 zur Befestigung des Gehäuses 70 an dem Achselement 16 vorgesehen. Der Befestigungsbereich 72 ist so ausgelegt, dass das Gehäuse 70 in unterschiedlichen Drehlagen γ um das Achselement 18 angeordnet und an diesem befestigt werden kann. Ein zweiter Befestigungsbereich 74 ermöglicht unterschiedliche Drehlagen γ der Aktuatoreinheit 20 bezüglich der Stellachse 66.

Durch die erfindungsgemäße Umlenkung werden konstruktiv Gestaltungsfreiheiten bereitgestellt, welche durch Variation der nachfolgend genannten Parameter eine nahezu beliebige Zylinderposition ermöglichen:
- a: axiale Neigung der Spreiz- beziehungsweise Stelleinheit, insbesondere der Stellachse, gegenüber der Radachse, vorzugsweise zwischen +/- 30°, weiter bevorzugt zwischen +/- 15° (vgl. Figur 1);
- β: Neigung des Bremszylinders, insbesondere der Aktuatorachse, relativ zur Spreizeinheit beziehungsweise Stellachse, insbesondere in der Umlenkebene, vorzugsweise zwischen +45° und +135°, weiter bevorzugt zwischen +75° und +105° (vgl. Figur 1);
- γ: Drehlage der Betätigungsvorrichtung beziehungsweise der Bremse um die Radachse, vorzugsweise zwischen 0° und 360°, (vgl. Figur 2); die Betätigungsvorrichtung ist vorzugsweise in unterschiedlichen Drehlagen, vorzugsweise stufenlos, verteilt um die Radachse anordbar;
- δ: Drehlage der Betätigungsvorrichtung bzw. des Bremszylinders oder der Aktuatorachse relativ zur Stell- bzw. Spreizeinheit, insbesondere um die Stellachse, vorzugsweise zwischen -90° und +90°, weiter bevorzugt zwischen -15° und +90° (insbesondere bezogen auf eine Ebene, welche die Radachse und die Stellachse enthält); (vgl. Figur 2);
- I₁: Hebellänge des mit der Stell- bzw. Spreizeinheit verbundenen Umlenk- oder Schwenkhebels, vorzugsweise zwischen 20 mm und 100 mm, besonders bevorzugt zwischen 40 mm und 80 mm, (vgl. Figur 1);
- I₂: Hebellänge des mit dem Bremszylinder verbundenen Umlenk- oder Schwenkhebels, vorzugsweise zwischen 15 mm und 200 mm, besonders bevorzugt zwischen 30 mm und 160 mm, (vgl. Figur 1).

Das Verhältnis I₂/I₁ liegt vorzugsweise im Bereich von 0,5 - 2,5, weiter bevorzugt zwischen 0,75 und 2,0, besonders bevorzugt zwischen 1 und 1,7.

Grundsätzlich ist es auch möglich, eine separate Umlenkeinrichtung zu verwenden, welche an eine bestehende Zylinderschnittstelle anzubringen ist.

Insgesamt stellt die Erfindung eine besonders flexibel einsetzbare Betätigungsvorrichtung zur Verfügung, welche auch in bauraumtechnisch anspruchsvollen Aggregaten eingesetzt werden kann.

### Bezugszeichenliste

- 10: Betätigungsvorrichtung
- 12: Bremstrommel
- 14: Felge
- 16: Achselement
- 18: Radachse
- 20: Aktuatoreinheit
- 22: Aktuatorelement
- 24: Kopfelement
- 26: Aktuatorachse
- 30: Aktuatorgehäuse
- 32: Flansch
- 34: Druckluftanschluss
- 40: Übertragungseinheit
- 42: Umlenkeinrichtung
- 44: Umlenkelement
- 46: Drehachse
- 50: Schwenkhebel
- 52: Schwenkhebel
- 54: erste Koppeleinrichtung
- 56: zweite Koppeleinrichtung
- 60: Stelleinheit
- 62: Stellelement
- 64: Übertragungskopf
- 66: Stellachse
- 70: Gehäuse
- 72: Befestigungsbereich
- 74: Befestigungsbereich

## Patentansprüche

1. Betätigungsvorrichtung für eine Bremse, insbesondere Trommelbremse, aufweisend
- eine Aktuatoreinheit (20), insbesondere einen Bremszylinder, mit einem linear bewegbaren Aktuatorelement (22),
- eine Stelleinheit (60) mit einem linear bewegbaren Stellelement (62), mittels welchem ein Bremselement relativ zu einer Bremsscheibe oder Bremstrommel (12) verlagerbar ist, und
- eine Übertragungseinheit (40) zum Übertragen einer Kraft von dem Aktuatorelement (22) auf das Stellelement (62),
wobei die Übertragungseinheit (40) eine Umlenkeinrichtung (42) aufweist, mittels welcher die von dem Aktuatorelement (22) auf das Stellelement (62) übertragene Kraft von einer ersten Richtung in eine zweite Richtung umlenkbar ist, und
wobei die Umlenkeinrichtung (42) ein drehbar um eine positionsfeste Drehachse (46) gelagertes Umlenkelement (44) mit mindestens zwei in Drehrichtung zueinander versetzten Koppeleinrichtungen (54, 56) zum Ankoppeln jeweils eines Kraftübertragungselements aufweist,
**dadurch gekennzeichnet,**
**dass** die Abstände der Koppeleinrichtungen (54, 56) von der Drehachse (46) des Umlenkelements (44) unterschiedlich sind.

2. Betätigungsvorrichtung nach Anspruch 1,
**dadurch gekennzeichnet,**
**dass** die Koppeleinrichtungen (54, 56) in einem Winkel von 20° bis 120°, vorzugsweise von 75° bis 105°, in Umfangsrichtung zueinander versetzt sind.

3. Betätigungsvorrichtung nach einem der vorhergehenden Ansprüche,
**dadurch gekennzeichnet,**
**dass** das drehbar gelagerte Umlenkelement (44) mindestens zwei sich radial erstreckende Schwenkhebel (50, 52) aufweist, an welchen die Koppeleinrichtungen (54, 56) ausgebildet sind.

4. Betätigungsvorrichtung nach einem der vorhergehenden Ansprüche,
**dadurch gekennzeichnet,**
**dass** zumindest eine der Koppeleinrichtungen (54, 56) als Gelenkverbindung ausgebildet ist.

5. Betätigungsvorrichtung nach einem der vorhergehenden Ansprüche,
**dadurch gekennzeichnet,**
**dass** zumindest eine der Koppeleinrichtungen (54, 56) eine Gleit- oder Rollfläche aufweist, entlang welcher ein Kraftübertragungselement, insbesondere in radialer Richtung, bewegbar, insbesondere gleitbar oder abrollbar, ist.

6. Betätigungsvorrichtung nach einem der vorhergehenden Ansprüche,
**dadurch gekennzeichnet,**
**dass** die Stelleinheit (60) und die Übertragungseinheit (40) in einem gemeinsamen Gehäuse (70) aufgenommen sind.

7. Betätigungsvorrichtung nach einem der vorhergehenden Ansprüche,
**dadurch gekennzeichnet,**
**dass** eine Befestigungseinrichtung (72, 74) vorgesehen ist, welche eine Befestigung der Betätigungsvorrichtung (10) an einem Achselement (16) in unterschiedlichen Drehlagen um eine Längsachse (66) des Stellelements (62) und/oder eine Radachse (18) eines Achselements (16) eines zu bremsenden Rades ermöglicht.

8. Betätigungsvorrichtung nach einem der vorhergehenden Ansprüche,
**dadurch gekennzeichnet,**
**dass** die Umlenkeinrichtung (42) eine Umlenkung der Kraft in einer Ebene bewirkt, welche durch eine Radachse (18) eines Achselements (16) eines zu bremsenden Rades und eine Senkrechte zur Radachse (18) aufgespannt wird.

9. Betätigungsvorrichtung nach einem der vorhergehenden Ansprüche,
**dadurch gekennzeichnet,**
**dass** eine erste Koppeleinrichtung (54, 56) vorgesehen ist, auf welche das Aktuatorelement (22) oder ein mit diesem verbundenes Kraftübertragungselement einwirkt.

10. Betätigungsvorrichtung nach einem der vorhergehenden Ansprüche,
**dadurch gekennzeichnet,**
**dass** das Aktuatorelement (22) und/oder das Stellelement (62) einen linear bewegbaren Grundkörper und einen an diesem schwenkbar gelagerten Übertragungskopf (64) aufweisen.

## Claims

1. Actuating apparatus for a brake, in particular a drum brake, having
- an actuator unit (20), in particular a brake cylinder, with a linearly movable actuator element (22),
- a setting unit (60) with a linearly movable setting element (62), by means of which a brake element can be moved relative to a brake disc or a brake drum (12), and
- a transmission unit (40) for transmitting a force from the actuator element (22) to the setting element (62),
the transmission unit (40) having a deflecting device (42), by means of which the force which is transmitted from the actuator element (22) to the setting element (62) can be deflected from a first direction into a second direction, and
the deflecting device (42) having a deflecting element (44) which is mounted about a fixed-position rotational axis (46) with at least two coupling devices (54, 56) which are offset with respect to one another in the rotational direction for coupling in each case one force transmission element,
**characterized**
**in that** the spacings of the coupling devices (54, 56) from the rotational axis (46) of the deflecting element (44) are different.

2. Actuating apparatus according to Claim 1,
**characterized**
**in that** the coupling devices (54, 56) are offset in the circumferential direction with respect to one another at an angle of from 20° to 120°, preferably of from 75° to 105°.

3. Actuating apparatus according to either of the preceding claims,
**characterized**
**in that** the rotatably mounted deflecting unit (44) has at least two pivoting levers (50, 52) which extend radially and on which the coupling devices (54, 56) are configured.

4. Actuating apparatus according to one of the preceding claims,
**characterized**
**in that** at least one of the coupling devices (54, 56) is configured as an articulated connection.

5. Actuating apparatus according to one of the preceding claims,
**characterized**
**in that** at least one of the coupling devices (54, 56) has a sliding or rolling face, along which a force transmission element can be moved, in particular can be slid or rolled, in particular in the radial direction.

6. Actuating apparatus according to one of the preceding claims,
**characterized**
**in that** the setting unit (60) and the transmission unit (40) are received in a common housing (70).

7. Actuating apparatus according to one of the preceding claims,
**characterized**
**in that** a fastening device (72, 74) is provided which makes fastening of the fastening apparatus (10) possible on an axle element (16) in different rotational positions about a longitudinal axis (66) of the setting element (62) and/or a wheel axis (18) of an axle element (16) of a wheel to be braked.

8. Actuating apparatus according to one of the preceding claims,
**characterized**
**in that** the deflecting device (42) brings about a deflection of the force in a plane which is defined by way of a wheel axis (18) of an axle element (16) of a wheel to be braked and a perpendicular with respect to the wheel axis (18).

9. Actuating apparatus according to one of the preceding claims,
**characterized**
**in that** a first coupling device (54, 56) is provided, on which the actuator element (22) or the force transmission element which is connected to the latter acts.

10. Actuating apparatus according to one of the preceding claims,
**characterized**
**in that** the actuator element (22) and/or the setting element (62) have/has a linearly movable main body and a transmission head (64) which is mounted pivotably on the said main body.

## Revendications

1. Dispositif d'actionnement pour un frein, en particulier un frein à tambour, comportant
- un ensemble actionneur (20), en particulier un cylindre de frein, comportant un élément actionneur (22) mobile linéairement,
- un ensemble de réglage (60) comportant un élément de réglage (62) mobile linéairement, au moyen duquel un élément de freinage est déplaçable par rapport à un disque de frein ou à un tambour de frein (12),
- un ensemble de transmission (40) pour transmettre une force depuis l'élément actionneur (22) à l'élément de réglage (62),
dans lequel l'ensemble de transmission (40) comprend un moyen de renvoi (42) par lequel la force transmise depuis l'élément actionneur (22) à l'élément de réglage (62) est susceptible d'être renvoyée depuis une première direction vers une seconde direction, et
le moyen de renvoi (42) est un élément de renvoi (44) monté mobile en rotation autour d'un axe de rotation (46) stationnaire et comportant au moins deux moyens de couplage (54, 56) décalés l'un par rapport à l'autre en direction de rotation pour coupler un élément de transmission de force respectif,
**caractérisé en ce que**
les distances des moyens de couplage (54, 56) par rapport à l'axe de rotation (46) de l'élément de renvoi (44) sont différentes.

2. Dispositif d'actionnement selon la revendication 1,
**caractérisé en ce que**
les moyens de couplage (54, 56) sont décalés l'un de l'autre en direction périphérique d'un angle de 20° à 120°, de préférence de 75° à 105°.

3. Dispositif d'actionnement selon l'une des revendications précédentes,
**caractérisé en ce que**
l'élément de renvoi (44) monté mobile en rotation comprend au moins deux leviers de pivotement (50, 52) qui s'étendent radialement et sur lesquels sont réalisés les moyens de couplage (54, 56).

4. Dispositif d'actionnement selon l'une des revendications précédentes,
**caractérisé en ce que**
l'un au moins des moyens de couplage (54, 56) est réalisé sous forme de liaison articulée.

5. Dispositif d'actionnement selon l'une des revendications précédentes,
**caractérisé en ce que**
l'un au moins des moyens de couplage (54, 56) comprend une surface de glissement ou de roulement le long de laquelle un élément de transmission de force est mobile en particulier par glissement ou par roulement, en particulier en direction radiale.

6. Dispositif d'actionnement selon l'une des revendications précédentes,
**caractérisé en ce que**
l'ensemble de réglage (60) et l'ensemble de transmission (40) sont logés dans un boîtier commun (70).

7. Dispositif d'actionnement selon l'une des revendications précédentes,
**caractérisé en ce que**
il est prévu un moyen de fixation (72, 74) qui permet une fixation du dispositif d'actionnement (10) sur un élément d'essieu (16) dans différentes positions de rotation autour d'un axe longitudinal (66) de l'élément de réglage (62) et/ou autour d'un axe de roue (18) d'un élément d'essieu (16) d'une roue à freiner.

8. Dispositif d'actionnement selon l'une des revendications précédentes,
**caractérisé en ce que**
le moyen de renvoi (42) provoque un renvoi de la force dans un plan qui est défini par un axe de roue (18) d'un élément d'essieu (16) d'une roue à freiner et par une perpendiculaire à l'axe de roue (18)

9. Dispositif d'actionnement selon l'une des revendications précédentes,
**caractérisé en ce que**
il est prévu un premier moyen de couplage (54, 56) sur lequel agit l'élément actionneur (22) ou un élément de transmission de force relié à celui-ci.

10. Dispositif d'actionnement selon l'une des revendications précédentes,
**caractérisé en ce que**
l'élément actionneur (22) et/ou l'élément de réglage (62) comporte(nt) un corps de base mobile linéairement et une tête de transmission (64) montée mobile en pivotement sur celui-ci.
